# FASCICULE DE BREVET EUROPEEN

(11) **EP 2 196 302 B1**
(45) Date de publication et mention de la délivrance du brevet: **17.10.2012**
(21) Numéro de dépôt: 09178041.1
(22) Date de dépôt: 04.12.2009
(51) Int. Cl.: B29C 63/22, B29C 53/02, B29L 11/00

(54) **Procédé d'application d'une structure multicouche sur un substrat courbe**
Verfahren zur Herstellung einer gekrümmten Mehrschichtstruktur
Method for producing a curved multi-layered structure

(30) Priorité: 11.12.2008 FR 0858474
(43) Date de publication de la demande: 16.06.2010
(73) Titulaire: Essilor International (Compagnie Générale d'Optique), 94220 Charenton Le Pont (FR)
(72) Inventeur: Fayolle, Romain, 94220 Charenton-Le-Pont (FR)
(74) Mandataire: Cabinet Plasseraud

(56) Documents cités:
- FR-A- 2 902 105
- US-A1- 2005 211 363

## Description

La présente invention concerne un procédé d'application d'une structure multicouche sur un substrat courbe.

Dans de nombreux procédés de fabrication, il est nécessaire d'appliquer un film qui est initialement plan sur un substrat qui est courbe. Or une telle opération est susceptible de causer des défauts dans le film, tels que des étirements, des plis ou des déchirures. De tels défauts sont encore plus fréquents ou plus importants lorsque la surface réceptrice du substrat, sur laquelle le film est appliqué, n'est pas développable ou est pseudo-sphérique. On entend par surface pseudo-sphérique une surface qui présente des courbures non nulles en certains points de celle-ci, simultanément selon deux directions perpendiculaires passant par chacun de ces points. Une surface sphérique est alors un cas particulier de surface pseudo-sphérique. En outre, une surface pseudo-sphérique peut être complexe, c'est-à-dire que les courbures peuvent varier entre des points différents de cette surface.

Pour réduire l'apparition de tels défauts, il est connu d'effectuer un préformage du film avant de l'appliquer sur la face courbe du substrat. Un tel préformage confère au film une forme courbe, qui diminue la déformation qu'il subit ultérieurement lorsqu'il est appliqué sur le substrat. Plusieurs techniques de préformage sont utilisées, telles que l'emboutissage à chaud, la déformation par application de pressions fluides ou gazeuses qui sont différentes entre les deux faces du film, ou encore la compression du film entre deux membranes déformables. Par exemple, le document FR 2 902 105 décrit un procédé de préformage pneumatique d'un film.

Or celles de ces techniques qui nécessitent que des outils de préformage entrent en contact avec le film produisent des rayures sur celui-ci, des traces de frottements, des fissures ou des arrachements de revêtements qui peuvent être présents sur le film. De tels défauts réduisent la qualité du produit qui est fabriqué, et peuvent être rédhibitoires pour certaines applications, notamment dans les domaines optiques et ophtalmiques pour lesquels les exigences de qualité sont élevées.

Par ailleurs, les procédés de préformage qui mettent en oeuvre des pressions différentes appliquées sur les deux faces du film ne permettent pas de contrôler suffisamment la forme courbe qui est conférée au film. Autrement dit, le film peut encore avoir après le préformage, une forme qui est éloignée de celle de la surface réceptrice du substrat. Son application sur cette dernière cause alors encore des défauts dans le film.

Enfin, la plupart des procédés de préformage qui sont connus produisent des contraintes à l'intérieur du film. De telles contraintes tendent à ramener le film vers une forme intermédiaire entre sa forme plane initiale et sa forme juste après le préformage. Pour cette raison supplémentaire, la forme définitive du film est mal contrôlée. En outre, elle est susceptible d'évoluer pendant une durée très longue, qui peut même continuer pendant la période d'utilisation du produit fabriqué qui incorpore le film. Les contraintes qui sont introduites dans le film pendant l'étape de préformage peuvent alors provoquer des décollements ultérieurs du film par rapport au substrat, des rétractions, des fluages, et même des déchirements du film qui apparaissent après une durée de latence plus ou moins longue.

Un but de la présente invention est alors de proposer un nouveau procédé d'application d'une structure multicouche sur un substrat courbe, avec un préformage de la structure qui ne présente pas les inconvénients des procédés antérieurs.

Pour cela, l'invention propose un procédé dans lequel la structure multicouche courbe est obtenue à partir d'au moins deux films individuels qui sont initialement plans. Ce procédé comprend les étapes suivantes :
/1/ former la structure multicouche de sorte que les films restent fermement reliés entre eux le long de surfaces respectives qui sont situées en vis-à-vis, tant qu'une température de la structure est inférieure à une température de rupture ; et
/2/ appliquer un traitement thermique à une partie au moins de la structure, avec une température maximale du traitement thermique qui est inférieure à la température de rupture, de sorte que les deux films présentent des contractions ou élongations respectives différentes après refroidissement de la structure jusqu'à une température d'utilisation.

L'écart entre les contractions ou élongations respectives des films produit alors une courbure de la structure multicouche. En particulier, la structure multicouche peut être pseudo-sphérique après le traitement thermique de l'étape /2/.

Dans la suite, on ne reprendra que le terme de contraction, étant entendu qu'il comprend aussi une élongation, considérée algébriquement comme une contraction de signe opposé.

Une étape /3/ du procédé de l'invention, qui est effectuée après l'étape /2/, consiste à appliquer la structure multicouche sur une face courbe du substrat.

Ainsi, dans un procédé selon l'invention, la courbure de la structure à l'issue de l'étape /2/ résulte de contractions respectives des films qui sont produites par un traitement thermique. Aucun outil de préformage n'est donc nécessaire, qui contraindrait la structure. De cette façon, la formation de défauts sur les films par des frottements ou des écrasements qui se produiraient pendant le préformage est évitée. La qualité des films est ainsi préservée. Par traitement thermique, on entend toute variation volontaire de température d'une partie au moins de la structure. En particulier, le traitement thermique peut comprendre un chauffage ou bien seulement un refroidissement d'une partie au moins de la structure.

Un autre avantage résulte de l'utilisation selon l'invention d'un traitement thermique pour produire la courbure de la structure. En effet, un traitement thermique peut réduire des contraintes internes qui seraient présentes dans les films, de sorte que ceux-ci sont dans un état d'équilibre mécanique qui est supérieur à l'issue du traitement thermique. Les films ont alors une stabilité dimensionnelle qui est améliorée, de sorte que la forme courbe qui est conférée au film est plus permanente. Autrement dit, la forme qui est conférée au film par le procédé de l'invention est susceptible d'évoluer ultérieurement dans une mesure très réduite.

En outre, un procédé selon l'invention est particulièrement simple à mettre en oeuvre, et ne requiert pas d'outil de préformage qui soit complexe et onéreux, tel qu'une presse. Un outil de chauffage tel qu'une étuve ou un four est suffisant.

Pendant le traitement thermique de l'étape /2/, la température de la structure multicouche reste inférieure à la température de rupture, de sorte que la cohésion de la structure multicouche n'est pas affectée. Ainsi, les films sont définitivement reliés entre eux à partir de l'étape /1/. Cette liaison, avec l'écart entre les contractions respectives des deux films, produit la courbure de la structure.

Dans un premier mode de mise en oeuvre de l'invention, la contraction que présente l'un au moins des films de la structure peut résulter au moins en partie du comportement thermoélastique de ce film. Dans ce cas, la structure multicouche est formée à l'étape /1/ à une température initiale qui est supérieure à la température d'utilisation. En outre, le traitement thermique de l'étape /2/ comprend un refroidissement de la structure en dessous de la température initiale. La contraction du film intervient alors principalement lors du refroidissement de la structure, et correspond au(x) coefficient(s) de dilatation thermique du (des) matériau(x) qui constitue(nt) ce film.

Dans un second mode de mise en oeuvre de l'invention, la contraction ou l'élongation de l'un au moins des films de la structure peut résulter au moins en partie d'une relaxation de contraintes qui sont présentes initialement dans ce film. Le traitement thermique de l'étape /2/ est alors adapté pour produire la relaxation de ces contraintes.

Eventuellement, ce second mode de mise en oeuvre de l'invention peut comprendre en outre un traitement thermique préalable de l'un au moins des films, qui est effectué avant l'étape /1/. Un tel traitement thermique préalable peut être destiné à réduire la relaxation de ce film qui est produite ultérieurement par le traitement thermique de l'étape /2/. De cette façon, une différence entre les amplitudes des contraintes qui sont présentes dans les films de la structure multicouche juste avant l'étape /2/ peut être augmentée ou ajustée, pour obtenir des contractions respectives des films après l'étape /2/ qui produisent la courbure voulue pour la structure multicouche.

Selon un premier perfectionnement du second mode de mise en oeuvre de l'invention, les films de la structure multicouche peuvent avoir des températures respectives qui sont différentes pendant une partie au moins du traitement thermique de l'étape /2/. De telles différence de température entre les films provoquent des relaxations de ceux-ci, et donc des contractions qui sont différentes d'un film à l'autre.

Selon un second perfectionnement, des zones séparées de l'un au moins des deux films de la structure multicouche peuvent avoir des températures respectives qui sont différentes pendant une partie au moins du traitement thermique de l'étape /2/. La relaxation de ce film qui est produite à l'étape /2/ peut alors varier d'une zone à l'autre. De cette façon, ce film peut subir des contractions et/ou des allongements locaux qui varient d'une zone à une autre, permettant de conférer une forme complexe à la structure.

Selon un troisième perfectionnement de l'invention, le procédé peut comprendre en outre un étirement de l'un au moins un des films qui est effectué avant l'étape /2/, de façon à modifier de façon permanente des contraintes qui sont présentes définitivement dans ce film après l'étape /2/.

L'invention est tout particulièrement adaptée lorsque l'un au moins des films de la structure multicouche comprend au moins un matériau organique, notamment un polymère. En effet, le procédé de l'invention permet alors de conférer à la structure des courbures qui peuvent être importantes. Dans ce cas, et lorsque la température d'utilisation de la structure multicouche est comprise entre 0°C et 30°C, la température maximale du traitement thermique peut être supérieure ou égale à 50°C, de préférence supérieure à 60°C. Toutefois, cette température maximale doit être inférieure en outre à une température de dégradation de l'un quelconque des matériaux de la structure multicouche.

Avantageusement, la structure multicouche peut être découpée avant l'étape /2/ selon un contour déterminé, de façon à la réduire à une portion utile. Une telle découpe permet qu'une partie inutile de la structure multicouche, qui est destinée à être séparée de la partie utile puis éliminée, ne perturbe pas la déformation de la partie utile par des contraintes s'étendant d'une partie à l'autre. De cette façon, la courbure finale qui est recherchée pour la partie utile de la structure peut être obtenue directement à l'issue de l'étape /2/.

Grâce au préformage qui est effectué selon l'invention dans les étapes /1/ et /2/, l'étape /3/ peut être exécutée ensuite sans produire de contraintes dans les films qui aient des intensités suffisantes pour causer des défauts.

La face courbe du substrat peut être convexe ou concave. Dans le cas d'une face réceptrice du substrat qui est concave, une structure multicouche qui a été courbée en utilisant l'invention peut présenter une courbure suffisante pour qu'elle soit appliquée sur le substrat à partir d'un premier point de contact qui est situé sensiblement au centre de la face réceptrice. Une telle application, qui commence au centre de la structure multicouche et de la face réceptrice du substrat et continue radialement en direction d'un bord périphérique, peut être régulière et qui continue. De cette façon, aucune rétention de bulle d'air entre la structure et le substrat ne se produit, ni étirement excessif de la structure multicouche. L'assemblage qui est obtenu présente alors une qualité supérieure.

Enfin, l'invention peut être avantageusement utilisée pour des applications optiques ou ophtalmiques. Dans ce dernier cas, le substrat peut comprendre une lentille ophtalmique.

D'autres particularités et avantages de la présente invention apparaîtront dans la description ci-après d'exemples de mise en oeuvre non limitatifs, en référence aux dessins annexés, dans lesquels :
- les figures 1a et 1b sont des vues respectivement en coupe et en plan d'une première structure multicouche à laquelle l'invention peut être appliquée ;
- la figure 2 est une vue en coupe de la première structure multicouche des figures 1a et 1b, après mise en oeuvre des premières étapes d'un procédé selon l'invention ;
- la figure 3 fait suite à la figure 2, pour illustrer la dernière étape du procédé de l'invention ; et
- les figures 4 et 5 correspondent respectivement aux figures 1a et 2 pour une seconde structure multicouche.

Pour raison de clarté des figures, les dimensions des éléments représentés ne correspondent ni à des dimensions ni à des rapports de dimensions réels. En outre, des références identiques qui sont indiquées sur des figures séparées désignent des éléments identiques ou qui ont des fonctions identiques.

L'invention est maintenant décrite en détail dans le cadre d'une application ophtalmique, mais il est entendu que cette application n'est prise qu'à titre d'exemple illustratif. A la lecture de la description suivante, l'Homme du métier saura mettre en oeuvre l'invention pour toute autre application, en adaptant éventuellement les valeurs numériques qui sont citées dans la suite.

La structure multicouche qui est considérée maintenant est destinée à être appliquée sur une face d'une lentille ophtalmique. De façon connue, une telle lentille ophtalmique peut être un verre semi-fini, dont une seule face possède une forme définitive. Alternativement, ce peut être un verre fini qui est obtenu à partir d'un tel verre semi-fini, en usinant l'autre face de façon appropriée pour que le verre produise une correction ophtalmique adaptée à un futur porteur de celui-ci. Lorsqu'il s'agit d'un verre fini, celui-ci peut encore posséder le bord périphérique du verre semi-fini, par exemple un bord circulaire de 60 mm (millimètre) de diamètre. Il peut aussi avoir déjà été détouré aux dimensions d'un logement de monture de lunettes dans lequel il est destiné à être assemblé.

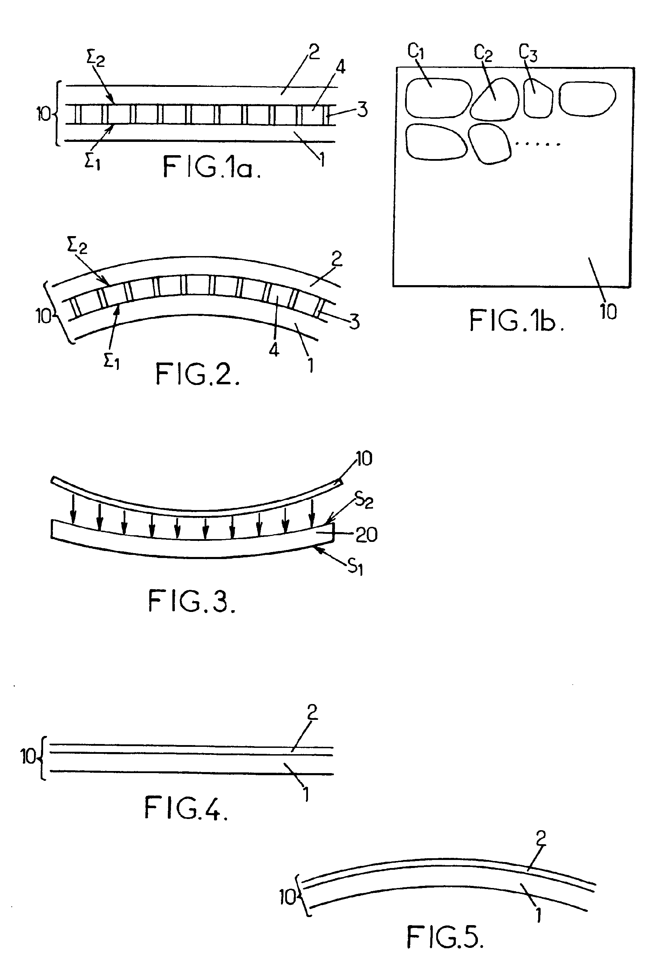

Une telle lentille ophtalmique est représentée en coupe sur la figure 3 et référencée 20. Les faces antérieure et postérieure de la lentille 20 sont désignées respectivement par S₁ et S₂. Elles sont pseudo-sphériques avec la face S₁ qui est convexe et la face S₂ qui est concave. Eventuellement, l'une au moins des deux faces S₁ et S₂ peut avoir une forme complexe.

Conformément à la figure 1, la structure multicouche 10 comprend deux films parallèles 1 et 2. Les deux films 1 et 2 sont solidaires, en étant connectés de façon permanente le long de leurs surfaces respectives Σ₁ et Σ₂ qui sont situées en vis-à-vis. La liaison entre les deux films 1 et 2 peut être de différents types. Selon un premier type, l'un des deux films peut avoir été formé sur l'autre, de sorte que la liaison peut résulter de l'adhérence initiale entre le dernier film formé et l'autre qui a servi de support à sa formation. Selon d'autres types de liaison, les films 1 et 2 peuvent être soudés ou brasés l'un à l'autre par leurs surfaces Σ₁ et Σ₂, ou encore collés avec une couche d'un matériau adhésif intermédiaire. Dans tous les cas, la liaison entre les films 1 et 2 est ferme et permanente tant que la structure possède une température qui est inférieure à une température de rupture. Autrement dit, en dessous de la température de rupture, la liaison peut transmettre des contraintes d'un film à l'autre à travers les surfaces Σ₁ et Σ₂. La température de rupture de la liaison entre les films 1 et 2 dépend du type de la liaison entre ceux-ci. Par exemple, la température de rupture peut être une température de fusion d'une colle qui produit la liaison, de sorte qu'au dessus de la température de rupture, les films 1 et 2 peuvent glisser l'un par rapport à l'autre, parallèlement à leurs surfaces Σ₁ et Σ₂. Pour plusieurs types de liaison tels que le brasage ou le soudage, la température de rupture de la liaison entre les films 1 et 2 peut être assimilée à la température d'assemblage de la structure 10.

Pour la structure multicouche 10 particulière de la figure 1, la liaison entre les films 1 et 2 comprend un réseau de parois 3 qui s'étendent perpendiculairement à la surface Σ₁. Ces parois forment un ensemble de cellules 4 qui sont juxtaposées parallèlement à la surface Σ₁. Les cellules 4 peuvent chacune être remplies d'une substance sélectionnée par ailleurs. Les parois 3 peuvent avoir été réalisées en premier lieu sur la surface Σ₁ du film 1, faisant fonction de film de base, de sorte qu'elles sont portées par et solidaires de celui-ci par leur mode de formation. Les cellules 4 sont ensuite remplies avec la substance sélectionnée, d'une façon individuelle ou collective qui n'est pas reprise ici. La structure multicouche 10 est alors formée en appliquant le film 2 sur les sommets des parois 3 qui sont opposés au film de base, de façon à fermer les cellules. Le film de fermeture 2 peut être brasé, collé ou soudé aux sommets des parois 3.

La structure 10 est de préférence transparente, notamment pour l'application ophtalmique considérée. Les films 1 et 2 peuvent chacun comprendre au moins un matériau organique, notamment un polymère. Par exemple, les films 1 et 2 peuvent tous les deux être à base de polyéthylène téréphtalate (PET), et avoir des épaisseurs respectives de 75 µm (micromètre) et 125 µm. De façon connue, de tels films sont couramment fabriqués par étirement bi-axial, de sorte qu'ils sont sujets individuellement à une relaxation mécanique lorsqu'ils sont chauffés. Les inventeurs ont constaté que dans le cas particulier des films de PET, une telle relaxation produit une contraction positive du film, c'est-à-dire un rétrécissement ou un rétreint de celui-ci. De façon courante, ce retreint peut être compris entre 0,2% et 1%, notamment pour un film de PET qui est chauffé au-delà de 100°C pendant plusieurs heures.

Dans d'autres modes de mise en oeuvre de l'invention, les films 1 et 2 de la structure multicouche 10 peuvent être constitués de matériaux qui sont différents. Par exemple, l'un des films peut être à base de PET et l'autre à base de polycarbonate (PC), de polyimide, de triacétate de cellulose (TAC), de copolymères cyclo-oléfines (COC), etc. L'effet de la relaxation sur les dimensions du film concerné, contraction ou allongement, ainsi que l'amplitude de cette contraction ou cet allongement, varie en fonction du matériau du film, de son mode de fabrication, de son épaisseur, d'éventuels étirements déjà subis, ainsi que du bilan thermique subi par le film depuis sa fabrication.

Par ailleurs, il est connu que des traitements thermiques successifs provoquent des relaxations différentes, et par conséquent des contractions ou des allongements différents. Usuellement, des traitements thermiques successifs qui sont appliqués à un même film provoquent des variations dimensionnelles du film qui ont un signe constant, et qui décroissent en valeur absolue. Ainsi, les variations dimensionnelles d'un film, notamment d'un film en matériau organique, qui sont susceptibles d'être produites par un traitement thermique fixé peuvent être réduites en soumettant ce film à un traitement thermique préalable. Autrement dit, le traitement thermique préalable produit une stabilisation du film vis-à-vis du traitement thermique suivant.

La relaxation qui vient d'être décrite pour des films soumis à un traitement thermique est donc irréversible. Elle est distincte de l'allongement réversible que subit un film lorsqu'il est chauffé, et qui correspond au coefficient de dilatation thermique du matériau constitutif du film. Dans ce dernier cas, le film se dilate lorsque sa température augmente, et se rétrécit inversement lorsque sa température diminue, de sorte que les dimensions finales d'un film qui est chauffé puis ramené à sa température initiale sont identiques à ses dimensions initiales, si aucune relaxation n'intervient.

De façon générale, les deux comportements précités d'un film, à savoir sa relaxation et sa dilatation réversible, interviennent simultanément pendant un traitement thermique, avec des importances relatives qui peuvent varier.

Selon un premier mode de mise en oeuvre de l'invention, le film 1 avec les parois 3 et les cellules remplies 4 d'une part, et le film 2 d'autre part, sont chauffés séparément jusqu'à une même température d'assemblage, par exemple de 60°C. Ils sont assemblés à cette température pour former la structure 10, puis refroidis jusqu'à la température ambiante, comprise entre 0°C et 30°C, par exemple sensiblement égale à 20°C. Ce refroidissement constitue le traitement thermique introduit par l'invention, pour ce premier mode de mise en oeuvre.

L'assemblage par lequel la liaison entre les films 1 et 2 est réalisée peut être de différents types. Ce peut être un brasage des sommets des parois 3 avec le film 2, ou bien un collage de ces sommets contre le film 2. Dans ce dernier cas, le film 2 peut être initialement recouvert d'une couche d'un matériau adhésif, par exemple d'un matériau adhésif sensible à la pression ou PSA pour «pressure sensitive adhesive» en anglais. La liaison qui est construite entre les films 1 et 2 est définitive. Au moment où elle est formée, chacun des films 1 et 2 présente des dimensions qui correspondent à l'équilibre de ce film à la température d'assemblage.

A l'issue du refroidissement, chacun des deux films 1 et 2 a subi une contraction, et un champ de contrainte de cisaillement est créé dans la structure 10, qui résulte d'un écart entre les contractions respectives des deux films. Ce champ de contrainte provoque une déformation de la structure 10, aboutissant à une forme courbe pour celle-ci. Dans la configuration de la structure 10 qui est représentée sur la figure 2, le film 1 a subi une contraction plus importante que le film 2. Il est alors en extension dans une partie au moins de son épaisseur, et forme la face concave de la structure 10. A l'inverse, le film 2 en compression sur une partie au moins de sa propre épaisseur et forme la face convexe. Les contractions des deux films 1 et 2 peuvent être biaxiales, de sorte que la structure 10 peut avoir une forme pseudo-sphérique. Lorsque les contractions de chaque film sont isotropes parallèlement aux films, la structure 10 devient sphérique.

Il est entendu que la courbure de la structure 10 résulte de variations dimensionnelles des films qui sont combinées avec la production de contraintes dans ceux-ci. L'Homme du métier comprendra en effet qu'il s'agit de deux aspects des mêmes phénomènes mis en oeuvre, les contraintes étant équilibrées par les variations dimensionnelles des films, au sein de la structure dans l'état final de celle-ci.

Dans ce premier mode de mise en oeuvre de l'invention, les contractions des films 1 et 2 peuvent être en grande partie réversibles. Tel est le cas si la courbure de la structure 10 disparaît presqu'entièrement quand la structure est chauffée à nouveau. La courbure de la structure 10 résulte alors principalement des comportements thermoélastiques des matériaux respectifs des films 1 et 2 pendant le refroidissement de la structure 10 après l'assemblage.

Le tableau 1 suivant indique les valeurs du rayon de courbure de la structure 10 lorsque les deux films 1 et 2 ont des épaisseurs identiques, mais sont distingués par leurs valeurs respectives du module d'Young E et du coefficient de dilatation thermique α. Le traitement thermique mis en oeuvre est essentiellement le refroidissement de la structure d'une température d'assemblage de 60°C jusqu'à 20°C :

**Tableau 1**

| Film 1 : → | E=80 MPa | E=75 MPa | E=76 MPa |
|---|---|---|---|
| Film 2 : ↓ | α=19.10⁻⁶ °C⁻¹ | α=22.10⁻⁶ °C⁻¹ | α=23.10⁻⁶ °C⁻¹ |
| E=80 MPa | 0 | 156 mm | 91 mm |
| α=19.10 °C⁻¹ | | | |
| E=75 MPa | 156 mm | 0 | 208 mm |
| α=22.10⁻⁶ °C⁻¹ | | | |
| E=76 MPa | 91 mm | 208 mm | 0 |
| α=23.10⁻⁶ °C⁻¹ | | | |

Selon un second mode de mise en oeuvre de l'invention, la structure 10 peut être assemblée à température ambiante, comprise entre 0°C et 30°C, par exemple égale à 20°C, de sorte qu'elle présente initialement une forme plane à cette température. Elle est ensuite soumise au traitement thermique introduit par l'invention. Celui-ci comprend un chauffage, par exemple jusqu'à une température qui peut être comprise entre 60°C et 120°C, suivi éventuellement d'un maintien à cette température pendant une durée qui peut être comprise entre 15 minutes et 2 heures, puis d'un refroidissement jusqu'à la température ambiante. Pendant ce traitement, chacun des films 1 et 2 subit une relaxation différente, et la structure 10 possède finalement une forme qui est courbe. Sa courbure dépend de l'écart entre les contractions algébriques respectives des deux films qui sont intervenues pendant le traitement thermique.

En fonction des épaisseurs respectives des films 1 et 2, et lorsque ceux-ci sont en PET, des rayons de courbure qui sont compris entre 70 mm et 230 mm ont été obtenu pour la structure 10 en utilisant ce second mode de mise en oeuvre de l'invention.

Eventuellement, l'un des deux films peut être soumis à un traitement thermique préalable avant d'être assemblé avec l'autre film. Il est alors déjà partiellement stabilisé avant l'assemblage, de sorte que ses dimensions varient moins lors du traitement thermique suivant, effectué après l'assemblage. Les deux films présentent alors un écart entre leurs contractions algébriques respectives, apparues après l'assemblage de la structure 10, qui est supérieur. Une courbure supérieure peut ainsi être conférée à la structure 10.

De façon générale, il peut être avantageux de soumettre l'un au moins des deux films 1 et 2, sinon les deux, à des traitements thermiques avant qu'ils soient assemblés l'un à l'autre, pour améliorer la reproductibilité de la courbure finale de la structure 10. L'Homme du métier saura déterminer les caractéristiques de tels traitements thermiques en fonction du degré de relaxation initial qui est recherché pour chaque film, et du niveau de reproductibilité de la courbure qui est conférée finalement à la structure 10.

Il est aussi possible d'introduire volontairement des contraintes dans l'un ou l'autre des films de la structure, avant que les films soient assemblés l'un avec l'autre pour former la structure multicouche, de façon à générer mécaniquement une composante au moins de la courbure finale de la structure. Si les films sont mis en contact par laminage, il est possible d'étirer l'un au moins des films dans la direction de laminage grâce à une tension longitudinale, et/ou dans la direction transverse, par exemple en utilisant des mors fixes.

Les films 1 et 2 peuvent être fournis initialement avec des dimensions qui sont supérieures à celles de la structure multicouche dans un produit final. Les films sont donc découpés en portions séparées qui correspondent chacune à une unité d'article final. Pour des raisons économiques de mise en oeuvre industrielle, plusieurs traitements peuvent être appliqués à chaque film avant que celui-ci soit découpé. Par exemple, la formation du réseau des parois 3 sur le film 1, le remplissage des cellules 4, ou des dépôts de revêtements fonctionnels sur le film 2 peuvent être effectuées avant que les films 1 et 2 soient découpés. De même, les deux films 1 et 2 peuvent être assemblés avant découpage, de sorte que la structure multicouche est formée avec des dimensions initiales qui correspondent à plusieurs articles finals qui seront produits.

Dans ce cas, la structure multicouche 10 peut être découpée de préférence avant le traitement thermique qui lui confère sa forme courbe. Elle est alors découpée selon un contour déterminé, qui correspond à une unité d'article produit. En fonction des dimensions des films 1 et 2, plusieurs contours peuvent être inscrits dans les feuilles des films 1 et 2, qui correspondent à des unités différentes d'articles produits. Eventuellement, les contours peuvent varier d'une unité d'article à une autre. La figure 1b représente une structure multicouche 10 assemblée, dans laquelle plusieurs contours de découpe ont été déterminés. Chacun de ces contours, qui sont notés C₁, C₂, C₃,..., correspond sensiblement à un logement de verre ophtalmique dans une monture de paire de lunettes. Ils séparent chacun une portion utile de la structure 10. On comprend par contour correspondant à une unité d'article produit, un contour qui correspond au bord définitif de la portion de la structure 10 qui est finalement comprise dans cette unité d'article. Toutefois, le contour C₁, C₂, C₃,... de chaque portion utile peut présenter une marge périphérique par rapport au bord définitif de cette portion dans le produit final. Une telle marge peut être utile, notamment, lors du détourage du verre si la portion est collée sur le verre fini avant que le détourage soit réalisé.

La température maximale de la structure 10 pendant le traitement thermique de courbure est inférieure à la température de rupture. Elle est évidemment aussi inférieure à toute température de dégradation des films 1 et 2 eux-mêmes. De cette façon, la cohésion de la structure 10 est conservée. Ce traitement thermique peut être réalisé en utilisant des moyens de chauffage qui sont disponibles usuellement. Ce peut être une étuve, un four, une lampe infrarouge, etc.

Selon un premier perfectionnement, les deux films 1 et 2 peuvent avoir des températures respectives qui sont distinctes pendant le traitement thermique qui produit la courbure de la structure 10. Par exemple, la structure 10 peut être posée horizontalement sur une plaque chauffante, en reposant sur l'un des deux films 1 ou 2 qui se trouve alors en dessous. Un flux gazeux peut alors être envoyé au contact du film qui est située au dessus, de façon à créer un écart entre les températures respectives des deux films pendant le traitement thermique. Le film supérieur, qui est porté ainsi à une température inférieure, subit une relaxation moins importante pendant le traitement thermique. Ses dimensions varient alors dans une moindre mesure. L'écart qui est ainsi créé entre les températures des deux films pendant le traitement thermique contribue à accroître la courbure de la structure 10.

Selon un second perfectionnement, la structure 10 peut être chauffée à des températures qui varient entre des zones différentes. Ces zones sont contiguës parallèlement à la structure 10, et correspondent à des variations d'une puissance du chauffage ou d'un refroidissement qui sont concentrées sur celles-ci. Des zones de la structure 10 qui sont ainsi chauffées à des températures plus élevées que des zones voisines subissent alors des relaxations plus importantes que ces dernières. De cette façon, la courbure qui est conférée à la structure 10 par le traitement thermique varie entre les zones, et la structure 10 présente finalement une forme complexe. Par exemple, lorsque le substrat 20 est une lentille progressive dont la face antérieure S₁ définit la progression de puissance optique, et que la structure 10 est destinée à être appliquée sur cette face S₁, il peut être avantageux de conférer à la structure 10 une courbure supérieure dans la partie de celle-ci qui recouvrira la zone de vision de près de la lentille. L'application de la structure 20 sur la face S₁ de la lentille sera encore meilleure.

De façon générale, la courbure qui a été conférée à la structure multicouche 10 en utilisant le préformage de l'invention, est avantageusement similaire à la courbure de la face courbe du substrat 20 sur laquelle la structure 10 est destinée à être appliquée. L'application de la structure 10 sur cette face, de sorte que la face du substrat 20 et la structure 10 soient en contact en tout point de la face du substrat, ne produit alors pas de contraintes excessives dans la structure. Aucune déchirure ni aucun pli ne se forme donc dans la structure 10. Par exemple, la structure 10 est appliquée sur la face concave S₂ du substrat 20 (figure 3). Eventuellement, cette application peut consister en un collage de la structure 10 sur le substrat 20.

Les figures 4 et 5 illustrent une autre application de l'invention. Le film 1 peut encore incorporer un film de base qui comprend au moins un polymère, par exemple du PET, et le film 2 peut comprendre un vernis qui est déposé sur le film 1. Lors du traitement thermique, le film 1 subit une relaxation inférieure à celle du film 2, de sorte que le film 1 devient la face concave de la structure 10, et le film 2 de vernis devient la face convexe.

Selon encore une autre application de l'invention, le film 1 peut encore incorporer un film de base qui comprend au moins un matériau organique, par exemple du PET, et le film 2 peut comprendre au moins un matériau minéral. Par exemple, le film 2 est lui-même un empilement de plusieurs couches qui a été formé sur le film 1. Il est destiné à conférer au film 1, et par suite à la lentille ophtalmique 20, des propriétés supplémentaires telles qu'une résistance aux chocs, une fonction antireflet, une fonction anti-salissure, une résistance aux rayures, une fonction hydrophobe, etc. De façon connue, la fonction antireflet, qui consiste à réduire une intensité de la lumière réfléchie par la lentille, est réalisée en disposant une succession de couches minces qui ont alternativement des valeurs basses et élevées d'un indice de réfraction lumineuse. Les couches minces à valeurs élevées de cet indice de réfraction sont en général en matériau minéral, tel que de l'oxyde de titane (TiO₂), par exemple. Du fait de la présence de telles couches minérales dans le film 2, ce dernier présente des variations dimensionnelles, lors d'un traitement thermique, qui sont beaucoup plus faibles que celles du film 1. Après mise en oeuvre de l'invention, le film 1 constitue alors encore la face concave de la structure 10.

Il est entendu que les mises en oeuvre de l'invention qui viennent d'être décrites en détail peuvent être modifiées tout en conservant certains au moins des avantages qui ont été cités. En particulier, la nature des films 1 et 2, ainsi que le type de la liaison qui les relie l'un à l'autre au sein de la structure 10 peut varier. Dans chaque cas, l'Homme du métier saura adapter les paramètres du traitement thermique qui produit la courbure recherchée pour la structure 10. Eventuellement, il pourra réaliser pour cela une série d'essais successifs, afin d'ajuster progressivement les paramètres du traitement thermique.

## Revendications

1. Procédé d'application d'une structure multicouche (10) sur un substrat, la structure multicouche étant obtenue à partir d'au moins deux films individuels (1, 2) initialement plans, ledit procédé comprenant les étapes suivantes :
/1/ former la structure multicouche de sorte que lesdits films restent fermement reliés entre eux le long de surfaces respectives (Σ₁, Σ₂) situées en vis-à-vis, tant qu'une température de la structure est inférieure à une température de rupture ;
/2/ appliquer un traitement thermique à une partie au moins de la structure multicouche, avec une température maximale du traitement thermique inférieure à la température de rupture, de sorte que les deux films présentent des contractions ou élongations respectives différentes après refroidissement de la structure jusqu'à une température d'utilisation, et un écart entre lesdites contractions ou élongations respectives des films produisant une courbure de la structure multicouche, puis
/3/ appliquer la structure multicouche (10) sur une face courbe (S1) du substrat (20).

2. Procédé selon la revendication 1, suivant lequel la structure multicouche (10) est pseudo-sphérique après le traitement thermique de l'étape /2/.

3. Procédé selon la revendication 1 ou 2, suivant lequel l'un au moins des films (1, 2) comprend au moins un matériau organique, notamment un polymère.

4. Procédé selon la revendication 3, suivant lequel la température d'utilisation de la structure multicouche (10) est comprise entre 0°C et 30°C, et la température maximale du traitement thermique est supérieure ou égale à 50°C, de préférence supérieure à 60°C.

5. Procédé selon l'une quelconque des revendications 1 à 4, suivant lequel :
- la structure multicouche (10) est formée à l'étape /1/ à une température initiale supérieure à la température d'utilisation ; et
- le traitement thermique de l'étape /2/ comprend le refroidissement de ladite structure multicouche en dessous de ladite température initiale, et l'un au moins des films (1, 2) présente, après ledit traitement thermique, une contraction résultant au moins en partie du comportement thermo-élastique dudit film.

6. Procédé selon l'une quelconque des revendications 1 à 4, suivant lequel le traitement thermique de l'étape /2/ est adapté pour produire une relaxation de contraintes présentes initialement au sein de l'un au moins des films (1, 2), la contraction ou l'élongation dudit film résultant au moins en partie de ladite relaxation.

7. Procédé selon la revendication 6, comprenant en outre l'étape suivante, effectuée avant l'étape /1/ :
- appliquer un traitement thermique préalable à l'un au moins des films (1, 2), de façon à réduire la relaxation dudit film produite par le traitement thermique de l'étape /2/.

8. Procédé selon la revendication 6 ou 7, suivant lequel les films (1, 2) de la structure multicouche ont des températures respectives différentes pendant une partie au moins du traitement thermique de l'étape /2/.

9. Procédé selon l'une quelconque des revendications 6 à 8, suivant lequel des zones séparées de l'un au moins des films (1, 2) de la structure multicouche ont des températures respectives différentes pendant une partie au moins du traitement thermique de l'étape /2/, de façon que la relaxation dudit film produite par ledit traitement thermique varie d'une zone à l'autre.

10. Procédé selon l'une quelconque des revendications précédentes, suivant lequel la structure multicouche (10) est découpée avant l'étape /2/selon un contour déterminé (C₁, C₂, C₃,...), de façon à réduire ladite structure à une portion utile.

11. Procédé selon l'une quelconque des revendications 1 à 10, suivant lequel un premier (1) des deux films incorpore un film de base comprenant au moins un premier matériau organique, notamment un premier polymère, et porte sur une face dudit film de base un réseau de parois (3) s'étendant perpendiculairement à la dite face et formant un ensemble de cellules (4) juxtaposées parallèlement à ladite face, le second film (2) comprend au moins un second matériau organique, notamment un second polymère, et suivant lequel l'étape /1/ comprend une application du second film sur des sommets des parois opposés au film de base, de façon à fermer les cellules.

12. Procédé selon l'une quelconque des revendications 1 à 10, suivant lequel l'un des films (1) incorpore un film de base comprenant au moins un polymère, et l'autre film (2) comprend un vernis.

13. Procédé selon l'une quelconque des revendications 1 à 10, suivant lequel l'un des films (1) incorpore un film de base comprenant au moins un matériau organique, et l'autre film (2) comprend au moins un matériau minéral.

14. Procédé selon l'une quelconque des revendications précédentes, suivant lequel ladite face (S1) du substrat est concave.

15. Procédé selon l'une quelconque des revendications précédentes, suivant lequel le substrat (20) comprend une lentille ophtalmique.

16. Procédé selon la revendication 15 ensemble la revendication 10, suivant lequel le contour déterminé (C₁, C₂, C₃,...) correspond sensiblement à un logement de verre ophtalmique dans une monture de paire de lunettes.

17. Procédé selon l'une quelconque des revendications précédentes, comprenant en outre un étirement de l'un au moins un des films (1, 2), effectué avant l'étape /2/, de façon à modifier de façon permanente des contraintes présentes définitivement dans ledit film après l'étape /2/.

## Claims

1. Method of applying a multi-layer structure (10) onto a substrate, the multi-layer structure being obtained from at least two initially flat individual films (1, 2), said method comprising the following steps:
/1/ forming the multi-layer structure so that said films remain firmly bonded to each other along respective facing surfaces (Σ₁, Σ₂), as long as a temperature of the structure is below a failure temperature;
/2/ applying a heat treatment to at least part of the multi-layer structure, with a maximum temperature of the heat treatment that is below the failure temperature, so that the two films have different respective contractions or elongations after cooling of the structure to a use temperature, and a difference between said respective contractions or elongations of the films producing a curvature of the multi-layer structure, then
/3/ applying the multi-layer structure (10) onto a curved face (S₁) of the substrate (20).

2. Method according to claim 1, in which the multi-layer structure (10) is pseudo-spherical after the heat treatment in step /2/.

3. Method according to claim 1 or 2, in which at least one of the films (1, 2) comprises at least one organic material, particularly a polymer.

4. Method according to claim 3, in which the use temperature of the multi-layer structure (10) is comprised between 0°C and 30°C, and the maximum temperature of the heat treatment is equal to or greater than 50°C, preferably greater than 60°C.

5. Method according to any one of claims 1 to 4, in which:
- the multi-layer structure (10) is formed during step /1/ at an initial temperature that is higher than the use temperature; and
- the heat treatment in step /2/ comprises the cooling of said multi-layer structure to below said initial temperature, and at least one of the films (1, 2) has, after said heat treatment, a contraction resulting at least partly from the thermoelastic behaviour of said film.

6. Method according to any one of claims 1 to 4, in which the heat treatment in step /2/ is capable of producing a relaxation of stresses initially present within at least one of the films (1, 2), the contraction or elongation of said film resulting at least partly from such relaxation.

7. Method according to claim 6, also comprising the following step, carried out before step /1/:
- applying a prior heat treatment to at least one of the films (1, 2) in order to reduce the relaxation of said film produced by the heat treatment in step /2/.

8. Method according to claim 6 or 7, in which the films (1, 2) of the multi-layer structure have different respective temperatures during at least part of the heat treatment in step /2/.

9. Method according to any one of claims 6 to 8, in which separate zones of at least one of the films (1, 2) of the multi-layer structure have different respective temperatures during at least part of the heat treatment in step /2/, so that the relaxation of said film produced by said heat treatment varies from one zone to another.

10. Method according to any one of the previous claims, in which the multi-layer structure (10) is cut before step /2/ along a given contour (C₁, C₂, C₃, etc.) so as to reduce said structure to a useful portion.

11. Method according to any one of claims 1 to 10, in which a first one (1) of the two films incorporates a base film comprising at least a first organic material, particularly a first polymer, and holds on a face of said base film a network of walls (3) extending perpendicular to said face and forming a set of cells (4) juxtaposed parallel to said face, and the second film (2) comprises at least a second organic material, particularly a second polymer, and in which step /1/ comprises the application of the second film onto the tops of the walls opposite the base film, so as to close the cells.

12. Method according to any one of claims 1 to 10, in which one of the films (1) incorporates a base film comprising at least one polymer, and the other film (2) comprises a varnish.

13. Method according to any one of claims 1 to 10, in which one of the films (1) incorporates a base film comprising at least one organic material, and the other film (2) comprises at least one mineral material.

14. Method according to any one of the previous claims, in which said face (S₁) of the substrate is concave.

15. Method according to any one of the previous claims, in which the substrate (20) comprises an ophthalmic lens.

16. Method according to claim 15 together claim 10, in which the given contour (C₁, C₂, C₃, etc.) corresponds substantially to a seat for an ophthalmic eyeglass in a frame of a pair of spectacles.

17. Method according to any one of the previous claims, also comprising a stretching of at least one of the films (1, 2) carried out before step /2/, so as to permanently modify the stresses that are ultimately present in said film after step /2/.

## Patentansprüche

1. Verfahren zum Aufbringen einer mehrschichtigen Struktur (10) auf ein Substrat, wobei die mehrschichtige Struktur ausgehend von wenigstens zwei einzelnen, anfänglich ebenen Schichten (1, 2) erhalten wird, wobei das Verfahren die folgenden Schritte umfasst:
/1/ Bilden der mehrschichtigen Struktur, so dass die Schichten entlang von jeweiligen, einander gegenüber liegenden Flächen (Σ₁, Σ₂) fest miteinander verbunden bleiben, solange eine Temperatur der Struktur kleiner ist als eine Bruch-Temperatur,
/2/ Anwenden einer thermischen Behandlung mit einer maximalen Temperatur der thermischen Behandlung, die kleiner ist, als die Bruch-Temperatur, auf wenigstens einen Teil der mehrschichtigen Struktur, so dass die zwei Schichten nach einem Abkühlen der Struktur bis zu einer Verwendungstemperatur jeweilige unterschiedliche Kontraktionen oder Elongationen aufweisen, und ein Unterschied zwischen den jeweiligen Kontraktionen oder Elongationen der Schichten eine Krümmung der mehrschichtigen Struktur erzeugt, dann
/3/ Aufbringen der mehrschichtigen Struktur (10) auf eine gekrümmte Fläche (S1) des Substrats (20).

2. Verfahren nach Anspruch 1, wobei die mehrschichtige Struktur (10) nach der thermischen Behandlung des Schrittes /2/ pseudo-sphärisch ist.

3. Verfahren nach Anspruch 1 oder 2, wobei wenigstens eine der Schichten (1, 2) wenigstens ein organisches Material, insbesondere ein Polymer umfasst.

4. Verfahren nach Anspruch 3, wobei die Verwendungstemperatur der mehrschichtigen Struktur (10) zwischen 0 °C und 30 °C liegt, und die maximale Temperatur der thermischen Behandlung größer oder gleich 50 °C ist, vorzugsweise größer als 60 °C.

5. Verfahren nach einem der Ansprüche 1 bis 4, wobei:
- die mehrschichtige Struktur (10) im Schritt /1/ bei einer Anfangstemperatur gebildet wird, die höher ist als die Verwendungstemperatur, und
- die thermische Behandlung des Schritts /2/ das Abkühlen der mehrschichtigen Struktur unter die Anfangstemperatur umfasst, und wenigstens eine der Schichten (1, 2) nach der thermischen Behandlung eine Kontraktion aufweist, die wenigstens teilweise aus dem thermoelastischen Verhalten der Schicht resultiert.

6. Verfahren nach einem der Ansprüche 1 bis 4, wobei die thermische Behandlung des Schritts /2/ dazu angepasst ist, um eine Entspannung von anfänglich inmitten von wenigstens einer der Schichten (1, 2) vorliegenden Spannungen zu erzeugen, wobei die Kontraktion oder Elongation der Schicht wenigstens teilweise aus der Entspannung resultiert.

7. Verfahren nach Anspruch 6, weiterhin umfassend den folgenden Schritt, der nach dem Schritt /1/ durchgeführt wird:
- Anwenden einer vorherigen thermischen Behandlung auf wenigstens eine der Schichten (1, 2), um die Entspannung von der Schicht, die durch die thermische Behandlung des Schritts /2/erzeugt wird, zu reduzieren.

8. Verfahren nach Anspruch 6 oder 7, wobei die Schichten (1, 2) der mehrschichtigen Struktur während wenigstens einem Teil von der thermischen Behandlung des Schritts /2/ jeweilige unterschiedliche Temperaturen aufweisen.

9. Verfahren nach einem der Ansprüche 6 bis 8, wobei getrennte Bereiche von wenigstens einer der Schichten (1, 2) der mehrschichtigen Struktur während wenigstens einem Teil der thermischen Behandlung des Schritts /2/ jeweilige unterschiedliche Temperaturen aufweisen, so dass die Entspannung des Films, die durch die thermische Behandlung erzeugt wird, sich von einem Bereich zum anderen unterscheidet.

10. Verfahren nach einem der vorhergehenden Ansprüche, wobei die mehrschichtige Struktur (10) vor dem Schritt /2/ längs einer bestimmten Kontur (C₁, C₂, C₃, ...) ausgeschnitten wird, um die Struktur auf einen Nutzabschnitt zu reduzieren.

11. Verfahren nach einem der Ansprüche 1 bis 10, wobei eine erste (1) der zwei Schichten eine Basis-Schicht umfasst, welche wenigstens ein erstes organisches Material umfasst, insbesondere ein erstes Polymer, und auf einer Oberfläche der Basis-Schicht ein Netzwerk aus Wänden (3) trägt, welche sich senkrecht zu dieser Oberfläche erstrecken und eine Anordnung von Zellen (4) bilden, die parallel zu der Oberfläche aneinandergereiht sind, wobei die zweite Schicht (2) wenigstens ein zweites organisches Material umfasst, insbesondere ein zweites Polymer, und wobei der Schritt /1/ ein Aufbringen der zweiten Schicht auf die der Basis-Schicht gegenüber liegenden oberen Ränder der Wände umfasst, um die Zellen zu schließen.

12. Verfahren nach einem der Ansprüche 1 bis 10, wobei die eine der Schichten (1) eine Basis-Schicht umfasst, welche wenigstens ein Polymer umfasst, und die andere Schicht (2) einen Lack umfasst.

13. Verfahren nach einem der Ansprüche 1 bis 10, wobei die eine der Schichten (1) eine Basis-Schicht umfasst, die wenigstens ein organisches Material umfasst, und die andere Schicht (2) wenigstens ein mineralisches Material umfasst.

14. Verfahren nach einem der vorhergehenden Ansprüche, wobei die Oberfläche (S1) des Substrats konkav ist.

15. Verfahren nach einem der vorhergehenden Ansprüche, wobei das Substrat (20) eine ophthalmische Linse umfasst.

16. Verfahren nach Anspruch 15, zusammen mit Anspruch 10, wobei die bestimmte Kontur (C₁, C₂, C₃, ...) im Wesentlichen einer Aufnahme für das ophthalmische Glas in einem Brillengestell entspricht.

17. Verfahren nach einem der vorhergehenden Ansprüche, weiterhin umfassend ein Strecken von wenigstens einer der Schichten (1, 2), was vor dem Schritt /2/ so durchgeführt wird, dass Spannungen, die in dem Film endgültig nach dem Schritt /2/ vorliegen, in permanenter Weise modifiziert werden
